# EUROPÄISCHE PATENTANMELDUNG

(11) **EP 2 450 150 A1**
(43) Veröffentlichungstag der Anmeldung: **09.05.2012**
(21) Anmeldenummer: 10014239.7
(22) Anmeldetag: 03.11.2010
(51) Int. Cl.: B25B 27/28, F16J 15/32

(54) **Dichtungsanordnung**

(71) Anmelder: Carl Freudenberg KG, 69469 Weinheim (DE)
(72) Erfinder: Colineau, Francois, 69469 Weinheim (DE); Hintenlang, Günter, 69518 Absteinach (DE)

(57) **Zusammenfassung**

Dichtungsanordnung, umfassend einen Dichtring (1), der bodenseitig (2) eine erste Dichtlippe (3) aufweist, die eine Durchbrechung (4) umschließt, wobei die Durchbrechung (4) von einem Verschlussdeckel (5) verschlossen ist. Der Verschlussdeckel (5) ist der ersten Dichtlippe (3) unmittelbar benachbart zugeordnet, wobei die erste Dichtlippe (3) den Verschlussdeckel (5) dichtend berührt.

## Beschreibung

### Technisches Gebiet

Die Erfindung betrifft eine Dichtungsanordnung, umfassend einen Dichtring, der bodenseitig eine erste Dichtlippe aufweist, die eine Durchbrechung umschließt, wobei die Durchbrechung von einem Verschlussdeckel verschlossen ist.

### Stand der Technik

Derartige Dichtungsanordnungen sind allgemeln bekannt. Die Dichtungsanordnungen sind in Maschinenelementen, beispielsweise in Bohrungen von Getriebegehäusen, eingesetzt, wobei der Verschlussdeckel der Dichtungsanordnung dafür sorgt, dass Verunreinigungen, zum Beispiel während des Transports des Maschinenelements oder dessen Lagerung, aus dem abzudichtenden Raum fern gehalten werden. Außerdem soll durch den Verschlussdeckel zum Beispiel Öl, das in dem abzudichtenden Raum eingefüllt ist, während des Transports darin zurückgehalten werden.

Dabel Ist allerdings zu beachten, dass der Verschlussdeckel die erste Dichtlippe berührt und die erste Dichtlippe dadurch stark verformt und / oder stark aufgedehnt wird. Dadurch besteht die Gefahr, dass der Werkstoff, aus dem die erste Dichtlippe besteht, relaxiert und / oder die Form der ersten Dichtlippe nachteilig verändert wird. Im Anschluss an die Entfernung des Verschlussdeckels wird zum Beispiel eine abzudichtende Welle in die Durchbrechung eingeführt, wobei die Welle, wegen der stark aufgedehnten ersten Dichtlippe, nicht mehr ausreichend geführt und vorzentriert wird und dadurch eine axial hinter der ersten Dichtlippe angeordnete zweite Dichtlippe während der Montage der Welle beschädigt werden kann. Außerdem kann es durch die starke Verformung/Aufdehnung der ersten Dichtlippe, die die abzudichtende Welle unter elastischer Vorspannung dichtend umschließen soll, zu Undichtigkeiten infolge Schmutzeintritt kommen, wenn die Dichtlippe während der bestimmungsgemäßen Verwendung der Dichtungsanordnung die abzudichtende Fläche nicht mit gleichmäßiger und/oder nicht ausreichender Vorspannung umschließt.

### Darstellung der Erfindung

Der Erfindung liegt die Aufgabe zugrunde, dass die zuvor genannten Nachteile vermieden werden und dass Dichtring und Verschlussdeckel gegeneinander abgedichtet sind.

Diese Aufgabe wird erfindungsgemäß durch eine Dichtungsanordnung nach Anspruch 1 gelöst.
Auf vorteilhafte Ausgestaltungen nehmen die Unteransprüche Bezug.

Zur Lösung der Aufgabe ist eine Dichtungsanordnung vorgesehen, wie eingangs beschrieben, wobei der Verschlussdeckel der ersten Dichtlippe unmittelbar benachbart zugeordnet ist und wobei die erste Dichtlippe den Verschlussdeckel dichtend berührt.
Die Dichtlippe kann dabei so gestaltet sein, dass ein gutes Abdichtungsergebnis zwischen den Dichtring und dem Verschlussdeckel erreicht wird, obwohl die Verformungen der Dichtlippe nur gering sind.

Vor der Montage des abzudichtenden Bauteils wird der Verschlussdeckel aus der Dichtungsanordnung entfernt.
Zuvor haben der Verschlussdeckel und die Dichtlippe, die den Verschlussdeckel dichtend berührt, während des Transports oder der Lagerung, beispielsweise eines Getriebegehäuses, dafür gesorgt, dass durch die Bohrung, durch die später eine Welle verläuft, keine Verunreinigungen in den abzudichtenden Raum gelangen und/oder kein abzudichtendes Medium aus dem abzudichtenden Raum in die Umgebung.

Während der Montage einer abzudichtenden Welle wird diese in die Durchbrechung eingeführt und durch die erste Dichtlippe vorzentriert. Dadurch nimmt die Weile eine günstige Position bezogen auf eine zweite Dichtlippe ein, die der ersten Dichtlippe in Montagerichtung benachbart zugeordnet ist. Die Gefahr einer Beschädigung der zweiten Dichtlippe ist durch die Vorzentrierung weit reduziert.

Bei montierter Welle berührt die erste Dichtlippe die abzudichtende Oberfläche der abzudichtenden Welle dann mit gleichmäßigem Anpressdruck entlang des gesamten Umfangs, so dass der Dichtring während seiner bestimmungsgemäßen Verwendung ausgezeichnete Gebrauchseigenschaften während einer langen Gebrauchsdauer aufweist.

Die erste Dichtlippe kann den Verschlussdeckel unter elastischer Vorspannung dichtend berühren.
Die erste Dichtlippe kann innenumfangsseitig einen in Richtung des abzudichtenden Raums vorgewölbten ersten Dichtabschnitt aufweisen, der den Verschlussdeckel dichtend berührt. Der vorgewölbte erste Dichtabschnitt fungiert praktisch als Dichtlippe und stützt sich an einer abzudichtenden Gegenfläche des Verschlussdeckels dichtend ab.

Der Verschlussdeckel kann einen sich axial in Richtung des abzudichtenden Raums erstreckenden Ringvorsprung aufweisen, der von dem ersten Dichtabschnitt dichtend umschlossen ist. die Dichtfläche für die Dichtlippe ist ein Bestandteil der Dichtungsanordnung, hier des Verschlussdeckels. Die Dichtungsanordnung weist insgesamt einen einfachen und teilearmen Aufbau auf und ist dadurch kostengünstig herstellbar.

Die erste Dichtlippe kann einen sich in radialer Richtung erstreckenden zweiten Dichtabschnitt aufweisen, der radial innenseitig in den ersten Dichtabschnitt übergeht. Durch eine solche Ausgestaltung weist die Dichtlippe eine große Länge im Dichtspalt zwischen dem Dichtring und dem Verschlussdeckel auf, wobei die große Länge der Dichtlippe innerhalb des Dichtspalts eine gute Abdichtung entlang des Dichtspafts sicherstellt.

Der Verschlussdeckel und der Dichtring können zerstörungsfrei lösbar miteinander verbunden sein. Hierbei ist von Vorteil, dass der Dichtring bei Entfernung des Verschlussdeckels aus der Dichtungsanordnung nicht beschädigt wird. Außerdem kann der Verschlussdeckel anschließend sortenrein entsorgt und recycelt werden oder gegebenenfalls gewaschen und wieder verwendet werden.

Der Verschlussdeckel besteht bevorzugt aus einem polymeren Werkstoff. Dadurch ist er leicht und rostfrei.

Der Verschlussdeckel und der Dichtring können formschlüssig miteinander verbunden sein. Eine formschlüssige Verbindung ist, im Vergleich zu einer kraftschlüssigen Verbindung, von Vorteil, weil die Montage der Dichtungsanordnung dadurch vereinfacht ist. Sind der Verschlussdeckel und der Dichtring formschlüssig miteinander verbunden, besteht keine Ungewissheit, ob die beiden Teile tatsächlich ordnungsgemäß und haltbar aneinander festgelegt sind. Bei kraftschlüssigen Verbindungen hängt die Haltbarkeit der Verbindung demgegenüber von der Kraft ab, mit der die beiden Teile ineinander gefügt werden. Differiert die Fügekraft, resultiert daraus eine mehr oder weniger haltbare Verbindung, was im Hinblick auf die Prozesssicherheit nachteilig ist.

Nach einer vorteilhaften Ausgestaltung kann es vorgesehen sein, dass der Dichtring einen sich in axialer Richtung erstreckenden Axialflansch aufweist, der den Verschlussdeckel außenumfangsseitig umschließt und zumindest einen sich radial nach innen erstreckenden Rastvorsprung aufweist, hinter dem der Verschlussdeckel einschnappbar ist. Am Axialflansch kann am freien stirnseitigen Ende eine Axialdichtlippe angeordnet sein. Der Rastvorsprung kann durch einen umfangsseitig umlaufenden, in sich geschlossenen Wulst gebildet sein. Der Radialflansch des Verschlussdeckels kann alternativ eine umfangsseitig umlaufende, in sich geschlossene nutförmige Hinterschneidung aufweisen, in die der Rastvorsprung einschnappbar ist. Der Verschlussdeckel ist durch die formschlüssige Verbindung mit dem Dichtring während der Herstellung der Dichtungsanordnung leicht mit dem Dichtring zu verbinden und später, auch wieder leicht zu trennen.

Der Axialflansch kann in Montagerichtung des Verschlussdeckels eine Einführschräge aufweisen. Dadurch wird die Zentrierung des Verschlussdeckels relativ zum Dichtring weiter vereinfacht, ebenso wie die Montage der Dichtungsanordnung. Die Einführungsschräge bildet außerdem eine erste Vorzentrierung bei Montage des abzudichtenden Maschinenelements in den Dichtrings, bevor eine zweite Vorzentrierung durch die erste Dichtlippe erfolgt. Eine in Montagerichtung des Maschinenelements axial nach der ersten Dichtlippe angeordnete zweite Dichtlippe wird dadurch vor montagebedingten Beschädigungen gut geschützt.

Der Axialflansch kann aus einem elastomeren Werkstoff bestehen.

Der Verschlussdeckel kann einen Radialflansch aufweisen, mit dem der Verschlussdeckel im Axialflansch des Dichtrings gehalten ist, wobei der Radialflansch den zweiten Dichtabschnitt dichtend berührt. Die Abdichtung erfolgt nicht nur im Bereich des ersten Dichtabschnitts sondem auch über die gesamte Länge des zweiten Dichtabschnitts. Dadurch wird ein gutes Abdichtungsergebnis erzielt.

Die erste Dichtlippe kann bevorzugt aus PTFE bestehen. Die erste Dichtlippe kann herstellungsbedingt im Wesentlichen eben und kreisringförmig ausgebildet sein und sich mit dem zweiten Dichtabschnitt parallel zum Radialflansch erstrecken. Im Anschluss an die Entfernung des Verschlussdeckels kann eine abzudichtende Welle durch die Durchbrechung hindurchgeführt werden, wobei während des Montagevorgangs die radial nach innen gerichtete erste Dichtlippe die Welle zunächst, bezogen auf die Dichtungsanordnung, vorzentriert und dann trompetenförmig in axialer Richtung verformt wird. Anschließend umschließt die erste Dichtlippe die abzudichtende Oberfläche der abzudichtenden Welle dichtend.

Der Radialflansch kann auf der der ersten Lippe axial abgewandten Seite einen Axialvorsprung aufweisen, auf den eine weitere entsprechend ausgebildete Dichtungsanordnung gleichen Typs kraftschlüssig aufschiebbar Ist. Eine derartige Ausgestaltung der Dichtungsanordnung ist für die Verpackung mehrerer Dichtungsanordnungen gleichen Typs von Vorteil. Durch das gegenseitige Aufschieben werden die Dichtungsanordnungen miteinander verbunden und bilden dadurch eine vormontierbare Einheit, die es erleichtert, mehrere Dichtungsanordnungen gleichen Typs platzsparend und sicher zu verpacken. Die Einheiten, die verpackt werden, können bevorzugt aus zwei bis fünf Dichtungsanordnungen gleichen Typs bestehen.

Der Dichtring kann als Radialwellendichtring ausgebildet sein, mit einem Stützkörper aus einem zähharten Werkstoff, der stirnseitig andererseits mit einer dynamisch beanspruchten zweiten Dichtlippe aus elastomerem Werkstoff verbunden ist, wobei sich die erste Dichtlippe und die zweite Dichtlippe mit einem zweiten axialen Abstand benachbart zugeordnet sind. Die zweite Dichtlippe kann, wie bei einem üblichen Radialwellendichtring, aus einem elastomerem Werkstoff bestehen und mit oder ohne Ringwendelfeder ausgebildet sein. Die zweite Dichtlippe und der Axialflansch sind bevorzugt einstückig ineinander übergehend und materialeinheitlich ausgebildet. Die Herstellung des Dichtrings, der einen Bestandteil der Dichtungsanordnung bildet, ist dadurch wesentlich vereinfacht; die Dichtungsanordnung ist dadurch besonders kostengünstig herstellbar.

Die erste Dichtlippe kann durch an sich bekannte Fertigungsverfahren in der Dichtungsanordnung festgelegt sein.

### Kurzbeschreibung der Zeichnung

Ein Ausführungsbeispiel der erfindungsgemäßen Dichtungsanordnung wird nachfolgend anhand der Figuren 1 bis 3 näher erläutert.

Diese zeigen:
Fig. 1 ein Ausführungsbeispiel einer erfindungsgemäßen Dichtungsanordnung in geschnittener Darstellung,
Fig. 2 eine perspektivische Ansicht der Dichtungsanordnung aus Fig. 1,
Fig. 3 drei Dichtungsanordnungen, wie in Fig. 1 dargestellt, die eine Einheit für eine Verpackung bilden.

### Ausführung der Erfindung

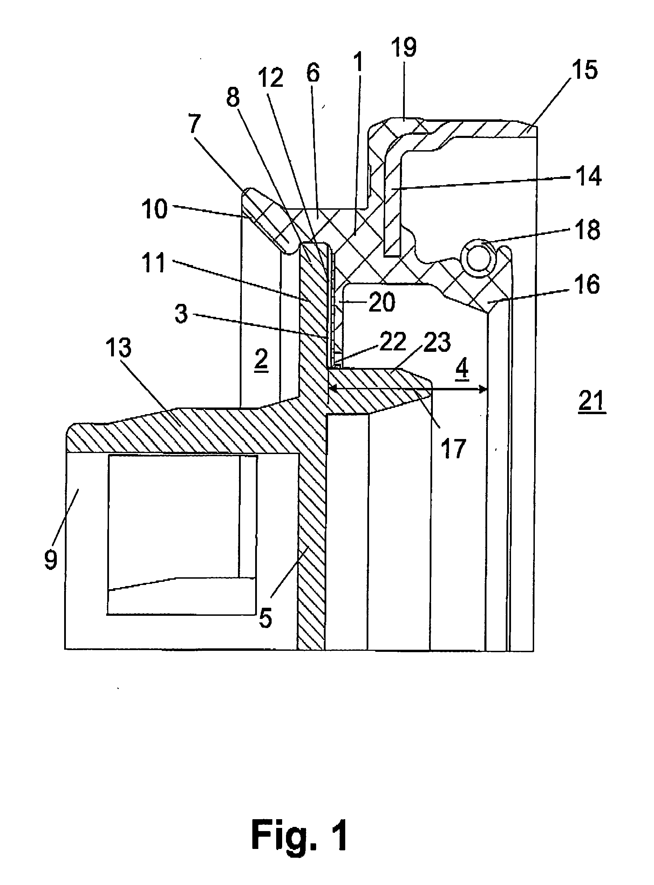

In Fig. 1 ist ein Ausführungsbeispiel einer Dichtungsanordnung gezeigt, die einen Dichtring 1 und einen Verschlussdeckel 5 umfasst.
Der Dichtring 1 ist als Radialwellendichtring ausgebildet und umfasst einen Stützkörper 14, der in dem hier gezeigten Ausführungsbeispiel aus einem metallischen Werkstoff besteht. Die zweite Dichtlippe 16 besteht aus einem elastomeren Werkstoff und ist von einer Ringwendelfeder 18 außenumfangsseitig umschlossen. Die statische Dichtung 19 dichtet gegenüber einem hier nicht dargestellten Gehäuse, beispielsweise einem Getriebegehäuse, ab und ist einstückig und materialeinheitlich mit der zweiten Dichtlippe 16 ausgebildet.
Der Dichtring 1 weist außerdem eine erste Dichtlippe 3 aus PTFE auf, die der zweiten Dichtlippe 16 mit einem axialen Abstand 17 benachbart zugeordnet ist. Die erste Dichtlippe 3 ist an einem Befestigungsabschnitt 20 des Dichtrings 1 festgelegt. Der zweite Dichtabschnitt 12 ist dichtend zwischen dem Radialflansch 11 und dem Befestigungsabschnitt 20 angeordnet. Die erste Dichtlippe 3 weist innenumfangsseitig einen in Richtung des abzudichtenden Raums 21 vorgewölbten ersten Dichtabschnitt 22 auf, der den Ringvorsprung 23, der Bestandteil des Verschlussdeckels 5 ist, aussenumfangsseitig dichtend umschließt. Der erste Dichtabschnitt 22 und der zweite Dichtabschnitt 12 sind einstückig ineinander übergehend ausgebildet.

Um den Verschlussdeckel 5 am Dichtring 1 befestigen zu können, weist der Dichtring 1 einen sich in axialer Richtung erstreckenden Axialflansch 6 auf, der ebenfalls, wie die zweite Dichtlippe 16, die statische Dichtung 19 und der Befestigungsabschnitt 20 aus elastomerem Werkstoff besteht und einstückig in einander übergehend und materialeinheitlich mit den jeweils genannten Teilen ausgebildet ist. Der Axialflansch 6 umschließt den Verschlussdeckel 5 außenumfangsseitig und weist einen sich radial nach innen erstreckenden wulstförmigen Rastvorsprung 7 auf, hinter dem der Verschlussdeckel 5 eingeschnappt ist. Um den Verschlussdeckel 5 leichter mit dem Dichtring 1 verbinden zu können, ist der Axialflansch 6 mit einer Einführschräge 10 versehen. Während der Montage des Verschlussdeckels 5 in Montagerichtung 9 mit dem Dichtring 1 werden diese beiden Teile durch die Einführschräge 10 selbsttätig zueinander zentriert. Durch die formschlüssige Verbindung von Verschlussdeckel 5 und Dichtring 1 miteinander, sind Verschlussdeckel 5 und Dichtring 1 zerstörungsfrei lösbar miteinander verbunden.

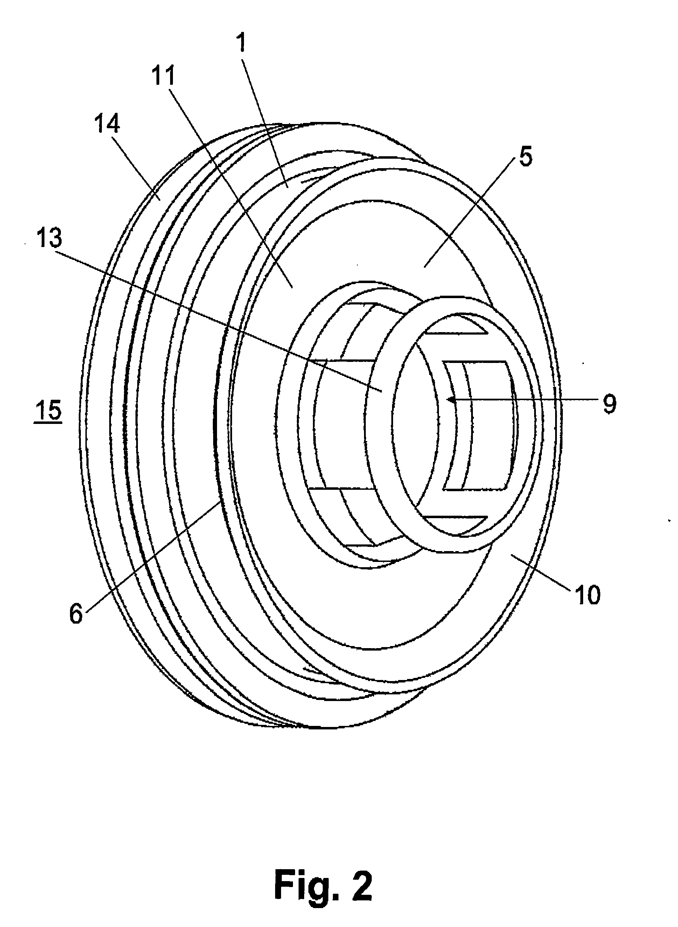

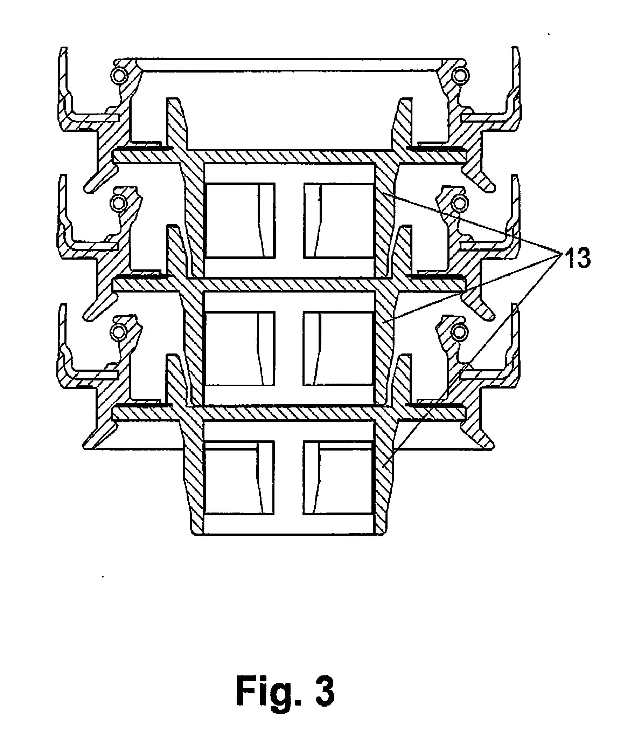

In Fig. 2 ist die Dichtungsanordnung aus Fig. 1 in einer perspektivischen Ansicht gezeigt. Der Radialflansch 11 weist einen Axialvorsprung 13 auf, auf den eine weitere entsprechend ausgebildete Dichtungsanordnung gleichen Typs kraftschlüssig aufschiebbar ist. Eine solche Einheit, bestehend aus mehreren Dichtungsanordnungen gleichen Typs, ist in Fig. 3 gezeigt.

In Fig. 3 sind drei der erfindungsgemäßen Dichtungsanordnungen entsprechend den Fig. 1 und 2 zum Zwecke der besseren Verpackung als Einheit kraftschlüssig miteinander verbunden. Die drei Dichtungsanordnungen sind in axialer Richtung mittels ihrer Axialvorsprünge 13 aufeinander geschoben und können dadurch als Einheit einfach und platzsparend verpackt werden.

## Patentansprüche

1. Dichtungsanordnung, umfassend einen Dichtring (1), der bodenseitig (2) eine erste Dichtlippe (3) aufweist, die eine Durchbrechung (4) umschließt, wobei die Durchbrechung (4) von einem Verschlussdeckel (5) verschlossen ist, **dadurch gekennzeichnet, dass** der Verschlussdeckel (5) der ersten Dichtlippe (3) unmittelbar benachbart zugeordnet ist und dass die erste Dichtlippe (3) den Verschlussdeckel (5) dichtend berührt.

2. Dichtungsanordnung nach Anspruch 1, **dadurch gekennzeichnet, dass** die erste Dichtlippe (3) innenumfangsseitig einen in Richtung des abzudichtenden Raums (21) vorgewölbten ersten Dichtabschnitt (22) aufweist, der den Verschlussdeckel (5) dichtend berührt.

3. Dichtungsanordnung nach einem der Ansprüche 1 oder 2, **dadurch gekennzeichnet, dass** der Verschlussdeckel (5) einen sich axial in Richtung des abzudichtenden Raums (21) erstreckenden Ringvorsprung (23) aufweist, der von dem ersten Dichtabschnitt (22) dichtend umschlossen ist.

4. Dichtungsanordnung nach einem der Ansprüche 1 bis 3, **dadurch gekennzeichnet, dass** die erste Dichtlippe (3) einen sich in radialer Richtung erstreckenden zweiten Dichtabschnitt (12) aufweist, der radial innenseitig in den ersten Dichtabschnitt (22) übergeht.

5. Dichtungsanordnung nach einem der Ansprüche 1 bis 4, **dadurch gekennzeichnet, dass** der Verschlussdeckel (5) und der Dichtring (1) zerstörungsfrei lösbar miteinander verbunden sind.

6. Dichtungsanordnung nach einem der Ansprüche 1 bis 5, **dadurch gekennzeichnet, dass** der Verschlussdeckel (5) und der Dichtring (1) formschlüssig miteinander verbunden sind.

7. Dichtungsanordnung nach einem Ansprüche 1 bis 6, **dadurch gekennzeichnet, dass** der Dichtring (1) einen sich in axialer Richtung erstreckenden Axialflansch (6) aufweist, der den Verschlussdeckel (5) außenumfangsseitig umschließt und zumindest einen sich radial nach innen erstreckenden Rastvorsprung (7) aufweist, hinter dem der Verschlussdeckel (5) einschnappbar ist.

8. Dichtungsanordnung nach Anspruch 7, **dadurch gekennzeichnet, dass** der Axialflansch (6) in Montagerichtung (9) des Verschlussdeckels (5) eine Einführschräge (10) aufweist.

9. Dichtungsanordnung nach einem der Ansprüche 1 bis 8, **dadurch gekennzeichnet, dass** der Verschlussdeckel (5) einen Radialflansch (11) aufweist, mit dem der Verschlussdeckel (5) im Axialflansch (6) des Dichtrings (1) gehalten ist.

10. Dichtungsanordnung nach Anspruch 9, **dadurch gekennzeichnet, dass** der Radialflansch (11) den zweiten Dichtabschnitt (12) dichtend berührt.

11. Dichtungsanordnung nach einem der Ansprüche 1 bis 10, **dadurch gekennzeichnet, dass** die erste Dichtlippe (3) aus PTFE besteht.

12. Dichtungsanordnung nach einem der Ansprüche 1 bis 11, **dadurch gekennzeichnet, dass** der Verschlussdeckel (5) auf der der ersten Dichtlippe (3) axial abgewandten Seite einen Axialvorsprung (13) aufweist, auf den eine weitere entsprechend ausgebildete Dichtungsanordnung gleichen Typs kraftschlüssig aufschiebbar ist.

13. Dichtungsanordnung nach einem der Ansprüche 1 bis 12, **dadurch gekennzeichnet, dass** der Dichtring (1) als Radialwellendichtring ausgebildet ist, mit einem Stützkörper (14) aus einem zähharten Werkstoff, der stirnseitig (15) mit einer dynamisch beanspruchten zweiten Dichtlippe (16) aus elastomerem Werkstoff verbunden ist und dass sich die erste Dichtlippe (3) und die zweite Dichtlippe (16) mit einem zweiten axialen Abstand (17) benachbart zugeordnet sind.
